## Europäisches Patentamt

## European Patent Office

## Office européen des brevets

(19)

(11) Veröffentlichungsnummer: **0 003 308**
**B1**

(12) # EUROPÄISCHE PATENTSCHRIFT

(45) Veröffentlichungstag der Patentschrift:
24.03.82

(51) Int. Cl.³: **H 04 L 27/22**

(21) Anmeldenummer: **79100112.6**

(22) Anmeldetag: **15.01.79**

(54) Schaltungsanordnung zum Korrigieren von Frequenzfehlern bei einer Übertragung von Daten.

(30) Priorität: **23.01.78 DE 2802784**

(43) Veröffentlichungstag der Anmeldung:
**08.08.79 Patentblatt 79/16**

(45) Bekanntmachung des Hinweises auf die Patenterteilung:
**24.03.82 Patentblatt 82/12**

(84) Benannte Vertragsstaaten:
**BE CH FR GB NL SE**

(56) Entgegenhaltungen:
**US-A-3 911 219**

**ELECTRONICS, Band 40, Nr. 20, 2. Oktober 1967, New York, USA, PORTER et al.: «Data at twice the speed eases HF traffic jam», Seiten 115–120**

(73) Patentinhaber: **SIEMENS AKTIENGESELLSCHAFT Berlin und München, Postfach 22 02 61, D-8000 München 22 (DE)**

(72) Erfinder: **Burger, Erich, Kerschensteinstrasse 140, D-8034 Unterpfaffenhofen (DE)**

## Schaltungsanordnung zum Korrigieren von Frequenzfehlern bei einer Übertragung von Daten

Die Erfindung bezieht sich auf eine Schaltungsanordnung zum Korrigieren von Frequenzfehlern bei einer Übertragung von Daten durch Datensignale, die entsprechend einer frequenzdifferentiellen Phasenmodulation moduliert sind, bei der eine Regelstufe mit einem Grobregelkreis und einem Feinregelkreis vorgesehen sind, die aus den Datensignalen korrigierte Datensignale erzeugen und bei der aus den korrigierten Datensignalen mittels eines Demodulators die übertragenen Daten zurückgewonnen werden.

Zum Übertragen von Daten über Kurzwellenverbindungen ist es bereits bekannt, die Datensignale entsprechend einer frequenzdifferentiellen Phasenmodulation zu modulieren. Diese Modulationsart eignet sich insbesondere für Kurzwellenverbindungen, da sich zwei nebeneinanderliegende Übertragungskanäle sowohl in den Phasenverwerfungen als auch in den Modulationsabschnitten nur geringfügig unterscheiden. Bei der frequenzdifferentiellen Phasenmodulation sind daher die Daten in den Phasendifferenzen von mehreren gleichzeitig übertragenen Datensignalen mit benachbarten Frequenzen enthalten. Das Frequenzband, in dem die Frequenzen der Datensignale enthalten sind, wird als Basisband bezeichnet. Die beiden Frequenzen, die das Basisband begrenzen, sind die Bezugsfrequenzen. In dem Datenempfänger werden die Datensignale mit zwei Mischsignalen in zwei Gruppensignale umgesetzt. Aus den Gruppensignalen gewinnt ein Demodulator die übertragenen Daten zurück.

Um eine grosse Unempfindlichkeit gegenüber Frequenzverwerfungen zu erreichen, ist eine Schaltungsanordnung zum Korrigieren von Frequenzfehlern erforderlich. An diese Schaltungsanordnung werden besondere Anforderungen gestellt. Die Frequenzfehler, bezogen auf die Mittenfrequenz der Datensignale, sind auf weniger als 1 Hz auszuregeln. Die Schaltungsanordnung soll einen grossen Frequenzbereich aufweisen und der Regelbereich und die Regelgeschwindigkeit sollen auf einfache Weise, je nach Anwendungsfall, änderbar sein. Bei einem Ausfall der empfangenen Datensignale muss der Regelzustand erhalten bleiben. Weiterhin dürfen Funkstörungen die Regelung nicht beeinflussen und die Regelung soll ohne die Verwendung von Pilotsignalen erfolgen.

Zum empfangsseitigen Korrigieren von Frequenzfehlern bei einem mit frequenzdifferentieller Phasenmodulation arbeitenden digitalen Nachrichtenübertragungssystem ist es bereits durch die Literaturstelle Electronics, Okt. 2, 1967, Seiten 115–120 bekannt, sowohl von einem Grobals auch von einem Feinregelkreis Gebrauch zu machen. Der eine eigene Synchronisiereinrichtung darstellende Grobregelkreis kommt hierbei lediglich bei der Erstsynchronisation des Systems zum Einsatz, während für den eigentlichen Systembetrieb die den Feinregelkreis darstellende weitere Synchronisiereinrichtung wirksam ist.

Der Erfindung liegt die Aufgabe zugrunde, für eine Phasenkorrekturschaltung der letztgenannten Art eine weitere Lösung anzugeben, bei der der Grob- und der Feinregelkreis durch einen gemeinsamen Regler zu einer Funktionseinheit mit automatischer Umschaltung der Regelart «grob» oder «fein» in Abhängigkeit der vorgegebenen Regelkriterien zusammengefasst sind, und zwar bei relativ geringem technischem Schaltaufwand.

Erfindungsgemäss wird die Aufgabe bei der Schaltungsanordnung der eingangs genannten Art gelöst durch einen Modulator, der durch Umsetzung der Datensignale mit Mischsignalen Gruppensignale erzeugt, die die korrigierten Datensignale darstellen, durch eine erste Regeleinheit, die aus den Gruppensignalen Feinregelsignale erzeugt, wenn der Frequenzfehler der Mischsignale kleiner als ein vorgegebener Betrag ist, durch eine zweite Regeleinheit, die aus den Gruppensignalen Grobregelsignale erzeugt, wenn der Frequenzfehler grösser als der vorgegebene Betrag ist, durch eine Auswahlstufe, die in Abhängigkeit von der Grösse des Frequenzfehlers aus den Feinregelsignalen und den Grobregelsignalen Regelsignale erzeugt, und durch einen gemeinsamen Regler, der aus Taktimpulsen vorgegebener Folgefrequenz in Abhängigkeit von den Regelsignalen die Mischsignale erzeugt.

Die Schaltungsanordnung gemäss der Erfindung hat den Vorteil, dass durch die Verwendung der ersten Regeleinheit noch sehr kleine Frequenzfehler erkannt und ausgeregelt werden. Die Schaltungsanordnung hat infolge der zweiten Regeleinheit einen grossen Fangbereich. Durch die Verwendung von integrierten digitalen Schaltkreisen erfordert die Schaltungsanordnung einen geringen Aufwand und sie lässt sich auf einfache Weise an den jeweils gewünschten Anwendungsfall anpassen. Bei einer Unterbrechung der Datensignale werden keine Regelsignale erzeugt und die Folgefrequenzen der Mischsignale werden so lange beibehalten, bis wieder Regelsignale auftreten.

Eine vorteilhafte Ausgestaltung der Schaltungsanordnung wird erreicht, wenn die erste Regeleinheit einen ersten Frequenzteiler enthält, der die Folgefrequenz der Gruppensignale durch einen vorgegebenen Faktor teilt und der Messsignale erzeugt, einen zweiten Frequenzteiler enthält, der jeweils während der durch die Messsignale festgelegten Zeitdauer freigegeben wird, der die Folgefrequenz der Taktimpulse durch einen vorgegebenen Faktor teilt und der Steuersignale erzeugt, und dass die erste Regeleinheit einen Zähler enthält, der in Abhängigkeit von den Steuersignalen aufwärts oder abwärts gezählt wird und der beim Erreichen vorgegebener Werte die Feinregelsignale erzeugt. Um sicherzustellen, dass die Messsignale immer nur zu solchen Zeitpunkten auftreten, zu denen die Gruppensignale eingeschwungen sind, ist es vorteilhaft, wenn die erste Regeleinheit einen Phasendetektor enthält, der bei jeder Änderung der Phase der Gruppensignale die Frequenzteiler zurücksetzt.

Das Kriterium für die Grobregelung wird auf einfache Weise erzeugt, wenn die zweite Regeleinheit zwei Diskriminatoren enthält, die Signale mit ersten bzw. zweiten Binärwerten erzeugen, wenn die Frequenzen der Gruppensignale innerhalb bzw. ausserhalb eines vorgegebenen Frequenzbereichs liegen und einen Codierer enthält, der aus den von den Diskriminatoren erzeugten Signalen die Grobregelsignale erzeugt.

Um die Qualität der empfangenen Datensignale auf einfache Weise prüfen zu können, ist es vorteilhaft, wenn die zweite Regelstufe einen Frequenzteiler enthält, der durch Taktimpulse niederer Folgefrequenz fortgeschaltet wird, der bei einer Änderung der von den Diskriminatoren abgegebenen Signale zurückgesetzt wird und der Sperrsignale an den Codierer abgibt.

Zur Erzeugung der Gruppensignale ist es günstig, wenn der Regler einen ersten und zweiten Frequenzmultiplizierer enthält, die die Folgefrequenz der Taktimpulse in Abhängigkeit von von einem Zähler abgegebenen Ausgangssignalen durch veränderbare Teilungsfaktoren teilen und die die Mischsignale erzeugen, wenn die Ausgangssignale dem ersten Frequenzmultiplizierer unmittelbar und dem zweiten Frequenzmultiplizierer über einen Addierer zugeführt werden, der von der durch die Ausgangssignale jeweils dargestellte Dualzahl eine konstante Dualzahl subtrahiert und wenn der Regler einen Codierer enthält, der in Abhängigkeit von den Regelsignalen den Zähler aufwärts oder abwärts zählt.

Zur Beseitigung von kurzzeitigen Schwankungen der Gruppensignale ist es vorteilhaft, wenn jedem Frequenzmultiplizierer ein Frequenzteiler nachgeschaltet ist, der die Folgefrequenzen der Mischsignale jeweils durch einen vorgegebenen Teilungsfaktor teilt.

Im folgenden wird ein Ausführungsbeispiel der Schaltungsanordnung gemäss der Erfindung anhand von Zeichnungen beschrieben. Es zeigen:

Fig. 1 ein Blockschaltbild einer Anordnung zum Übertragen von Daten,

Fig. 2 ein Schaltbild einer ersten Regeleinheit,

Fig. 3 ein Zeitdiagramm von Signalen an verschiedenen Punkten der ersten Regeleinheit,

Fig. 4 ein Schaltbild eines Modulators und einer zweiten Regeleinheit,

Fig. 5 ein Zeitdiagramm von Signalen an verschiedenen Punkten der zweiten Regeleinheit,

Fig. 6 ein Schaltbild einer Auswahlstufe und eines Reglers.

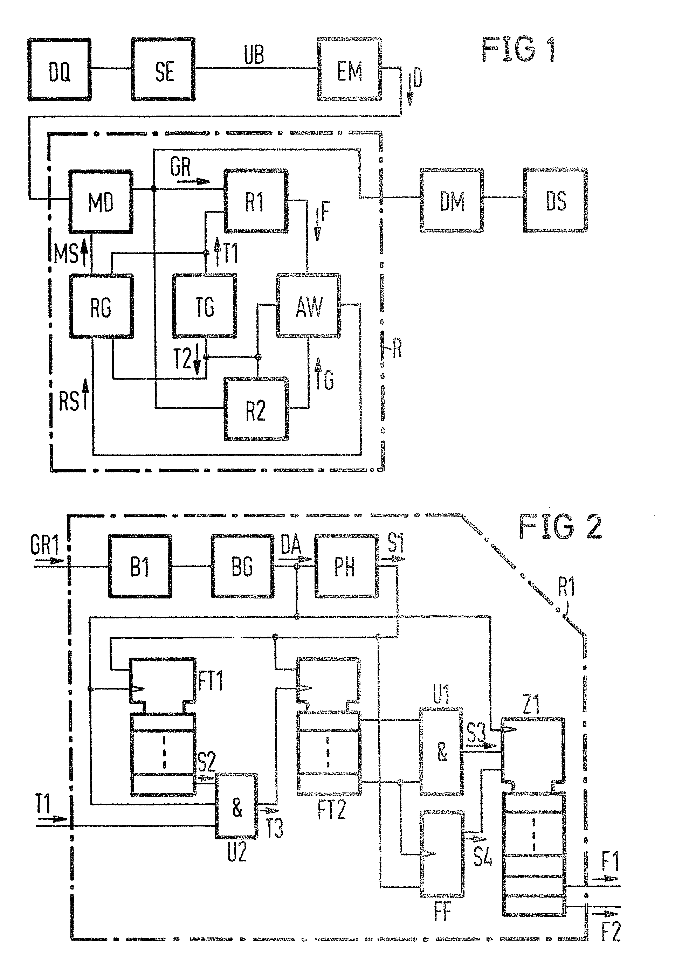

Bei der in Fig. 1 dargestellten Schaltungsanordnung erzeugt eine bei einem Datensender vorgesehene Datenquelle DQ Daten und gibt diese an einen Sender SE ab. Der Sender SE erzeugt Datensignale und überträgt sie über eine Übertragungsstrecke UB zu einem Datenempfänger. Die Datensignale sind in bekannter Weise entsprechend einer frequenzdifferentiellen Phasenmodulation moduliert. Der Datenempfänger enthält einen Empfänger EM, der die über die Übertragungsstrecke UB übertragenen Datensignale in für eine weitere Verarbeitung geeignete Datensignale D umsetzt. Die Frequenzen der Datensignale D liegen beispielsweise innerhalb des Sprachbandes im Bereich zwischen 1040 und 2400 Hz. Die Datensignale D werden daher auch als Basisbandsignale bezeichnet. Die Datensignale D liegen an einer Regelstufe R an, in der die Datensignale D mit Mischsignalen MS moduliert werden und die Gruppensignale GR erzeugt, aus denen ein Demodulator DM die übetragenen Daten zurückgewinnt und an eine Datensenke DS abgibt.

Die Regelstufe R enthält eine erste Regeleinheit R1, die aus Taktimpulsen T1 hoher Folgefrequenz Feinregelsignale F erzeugt, mit denen eine Feinregelung der Folgefrequenz der Mischsignale MS erfolgt. Weiterhin enthält die Regelstufe R eine zweite Regeleinheit R2, die aus den Gruppensignalen GR und Taktimpulsen T2 niedriger Folgefrequenz Grobregelsignale G erzeugt, mit denen eine Grobregelung der Mischsignale MS durchgeführt wird. Die Feinregelsignale F und die Grobregelsignale G werden über eine Auswahlstufe AW wahlweise einem Regler RG zugeführt, der in Abhängigkeit von der Abweichung der Folgefrequenz der Mischsignale M von einer Sollfrequenz entweder mit Hilfe der Feinregelsignale F oder der Grobregelsignale G die Abweichungen ausregelt.

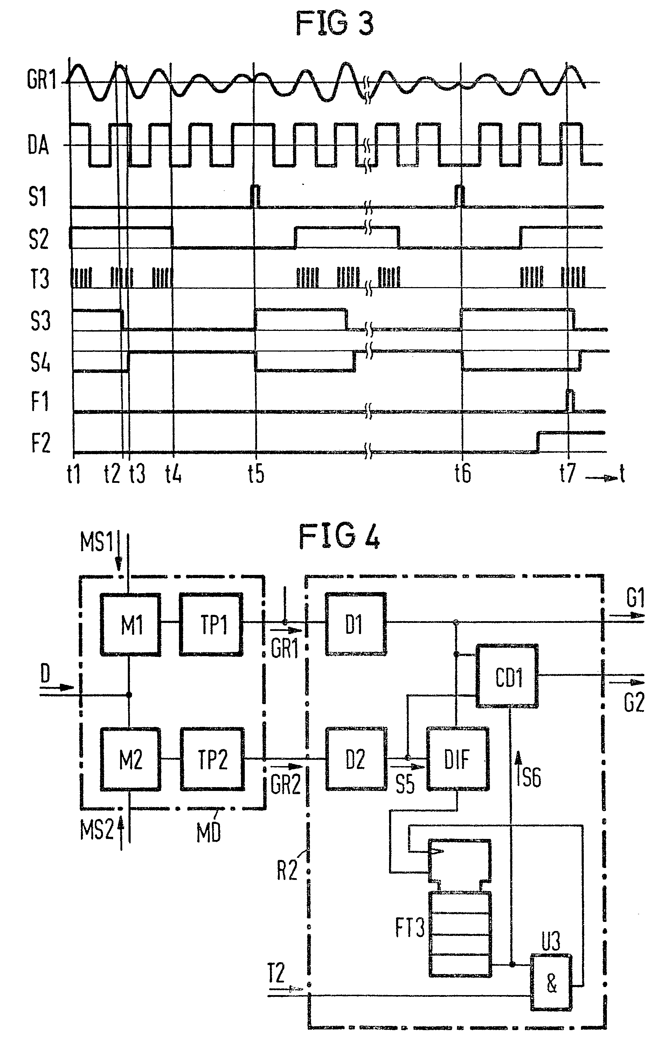

Die in Fig. 2 dargestellte Regeleinheit R1 enthält einen Bandpass B1, eine Begrenzerstufe BG, einen Phasendetektor PH, zwei Frequenzteiler FT1 und FT2, einen Zähler Z1, ein Flipflop FF und zwei UND-Glieder U1 und U2. Weitere Einzelheiten der Regeleinheit R1 werden zusammen mit den in Fig. 3 dargestellten Zeitdiagrammen beschrieben.

Bei den in Fig. 3 dargestellten Zeitdiagrammen sind in Abszissenrichtung die Zeit t und in Ordinatenrichtung die Momentanwerte von Signalen an verschiedenen Punkten der Regeleinheit R1 dargestellt. Der Modulator MD erzeugt durch Umsetzung der Datensignale D die Gruppensignale GR1 und GR2. Die Gruppensignale GR1 liegen am Bandpass B1 an. Der Bandpass hat eine Mittenfrequenz von 4160 Hz und eine Bandbreite von 40 Hz. Die Gruppensignale GR1 weisen Frequenzen im Bereich von 3520 bis 4160 Hz auf. Die Signale am Ausgang des Bandpasses B1 werden dem Begrenzer BG zugeführt, der die Signale verstärkt und begrenzt und Datensignale DA abgibt. Diese Datensignale DA liegen einerseits an einem Phasendetektor PH, der Phasensprünge in den Datensignalen DA erkennt und andererseits an den Takteingängen eines als Zähler ausgebildeten Frequenzteilers FT1 und eines als Zwei-Richtungs-Zähler ausgebildeten Zählers Z1 an. Der Frequenzteiler FT1 teilt die Folgefrequenz der Datensignale DA durch den Faktor 64 und gibt an seinem Ausgang Messsignale S2 ab. Der Phasendetektor PH gibt an seinem Ausgang Signale S1 ab, die die Frequenzteiler FT1 und FT2 sowie das Flipflop FF zurücksetzen.

Zum Zeitpunkt t1 nimmt das Gruppensignal GR1 einen positiven Wert an. Gleichzeitig nimmt das Datensignal DA den Binärwert 1 an. Unter der Annahme, dass das Messsignal S2 ebenfalls den Binärwert 1 hat, gibt das UND-Glied U2 Taktimpulse T3 ab, deren Folgefrequenz mit der Folgefrequenz der Taktimpulse T1 von 3,9936 MHz übereinstimmt. Die Taktimpulse T3 liegen am Takteingang des als Zähler ausgebildeten Frequenzteilers FT2 an, der die Folgefrequenz der Taktimpulse T3 durch den Teilungsfaktor 30 720 teilt. Dem Frequenzteiler FT2 ist das UND-Glied U1 nachgeschaltet, das immer dann das Signal S3 mit dem Binärwert 1 abgibt, wenn die Zählerstände des Frequenzteilers FT2 einer Folgefrequenz der Gruppensignale GR1 entsprechen, die grösser ist als 4176 Hz und kleiner ist als 4144 Hz. Immer dann, wenn das Signal S3 den Binärwert 1 annimmt, wird der Zähler Z1 gesperrt. Auf diese Weise wird verhindert, dass die Regeleinheit R1 ein Feinregelsignal abgibt, wenn die Folgefrequenz der Gruppensignale GR1 um mehr als ±16 Hz von der Nennfrequenz von 4160 Hz abweicht. Das Signal S3 nimmt zum Zeitpunkt t2 den Binärwert 0 an.

Das Signal am höchstwertigen Ausgang des Frequenzteilers FT2 liegt am Takteingang des Flipflops FF an. Das Flipflop FF gibt das Signal S4 ab, das die Richtung festlegt, in der der Zähler Z1 zählt. Das Signal S4 nimmt zum Zeitpunkt t3 den Binärwert 1 an und veranlasst den Zähler Z1 aufwärts zu zählen, während er bis zum Zeitpunkt t3 abwärts gezählt wurde.

Zum Zeitpunkt t4 nimmt das Messsignal S2 den Binärwert 0 an. Das UND-Glied U2 gibt damit keine Taktimpulse T3 mehr ab. Der Zähler Z1 hat einen vorgegebenen Zählerstand erreicht, der davon abhängt, ob mehr Taktimpulse aufgetreten sind, während der Zähler abwärts oder aufwärts gezählt hat. Es wird beispielsweise angenommen, dass der Zähler Z1 zum Zeitpunkt t4 einen Zählerstand erreicht hat, der grösser ist als sein halber Zählbereich.

Zum Zeitpunkt t5 tritt im Gruppensignal GR1 ein Phasensprung von 180° auf. Der Phasendetektor PH erkennt den Phasensprung und erzeugt einen Impuls S1, der die Frequenzteiler FT1 und FT2 und das Flipflop FF zurücksetzt. Anschliessend wiederholen sich zwischen den Zeitpunkten t5 und t6 ähnliche Vorgänge wie zwischen den Zeitpunkten t1 und t5. Es wird angenommen, dass zwischen den Zeitpunkten t5 und t6 mehr Taktimpulse T3 aufgetreten sind, die den Zähler Z1 aufwärts zählen als solche, die ihn abwärts zählen. Ähnliche Vorgänge wiederholen sich nach dem Zeitpunkt t6. Wieder treten mehr Taktimpulse T3 auf, die den Zähler Z1 aufwärts zählen, so dass der Zähler Z1 zum Zeitpunkt t7 seinen grössten Zählerstand erreicht und ein Übertragssignal erzeugt. Dieses Übertragssignal gibt der Zähler Z1 als Feinregelsignal F1 über die Auswahlstufe AW als Regelsignal RS an den Regler RG ab. Ausserdem gibt der Zähler Z1 ein Feinregelsignal F2 ab, das angibt, dass das Übertragssignal beim Aufwärtszählen abgegeben wird.

Das Feinregelsignal F2 entspricht somit dem Vorzeichen, während das Reinregelsignal F1 dem Betrag des Zählerstands entspricht.

Der in Fig. 4 dargestellte Modulator MD enthält zwei Mischstufen M1 und M2, denen an jeweils einem ersten Eingang die Datensignale D, die Basisbandsignale, zugeführt werden. An zweiten Eingängen liegen die Mischsignale MS1 bzw. MS2 an. Die Mischsignale MS1 und MS2 werden im Regler RG erzeugt und sie haben Folgefrequenzen von 5200 Hz bzw. 5920 Hz. Den Mischstufen M1 und M2 sind Tiefpässe TP1 bzw. TP2 nachgeschaltet, die die Gruppensignale GR1 bzw. GR2 abgeben.

Die Gruppensignale GR1 und GR2 liegen an der Regeleinheit R2 an. Sie enthält zwei Diskriminatoren D1 und D2, einen Codierer CD1, ein Differenzierglied DIF, einen Frequenzteiler FT3 und ein UND-Glied U3. Mit Hilfe der Regeleinheit R2 wird das Kriterium für die Grobregelung erzeugt. Die Regeleinheit R2 gibt Grobregelsignale G1 und G2 ab, die das Vorzeichen des Frequenzfehlers angeben, wenn zugleich dessen Betrag grösser als 15 Hz ist. Die Grobregelsignale G1 und G2 werden dadurch erzeugt, dass man mit je einem Bandpass in den Diskriminatoren D1 und D2 entscheidet, ob Spektrallinien der Gruppensignale in den Durchlassbereich fallen oder nicht. Die Durchlassbereiche der Bandpässe sind so angeordnet, dass bei einem Frequenzfehler, der grösser als 15 Hz ist, einer der Bandpässe kein Signal erzeugt. Das Ausgangssignal dieses Bandpasses bestimmt dann das Vorzeichen des Frequenzfehlers.

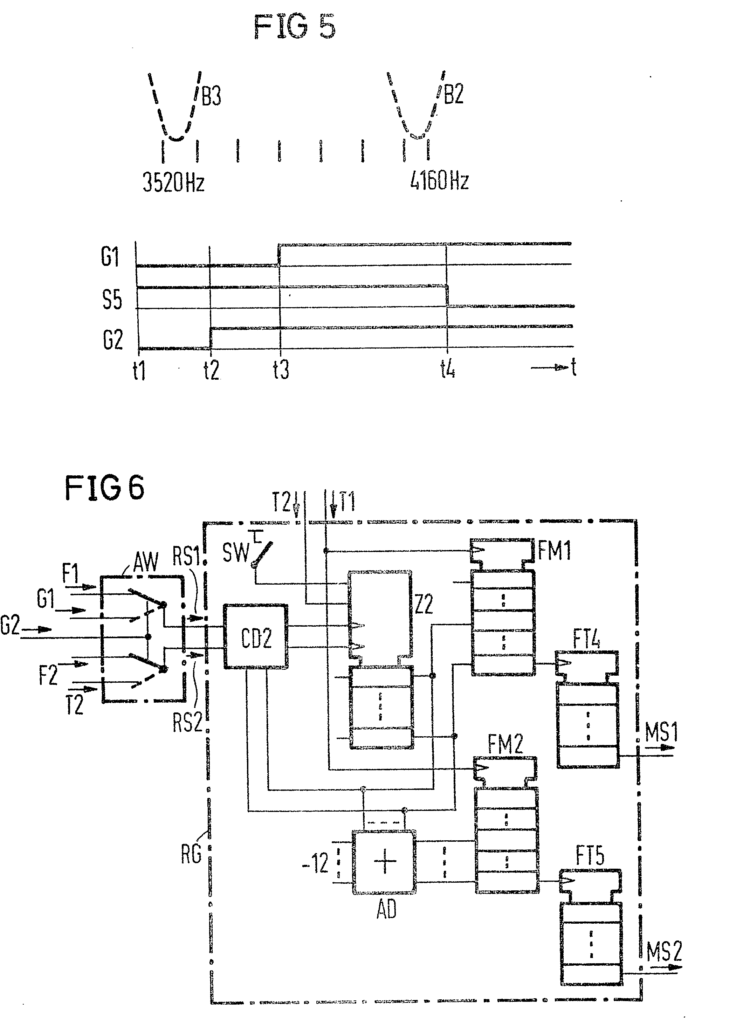

Die Diskriminatoren D1 und D2 enthalten jeweils einen Bandpass B2 und B3, dessen Mittenfrequenz auf 4110 bzw. 3570 Hz eingestellt ist und der jeweils eine Bandbreite von 80 Hz aufweist. Die Durchlassbereiche dieser Bandpässe B2 und B3 sind somit an den oberen und unteren Grenzen der Frequenzen der Gruppensignale von 4160 bzw. 3520 Hz angeordnet. Jedem Bandpass ist ein Gleichrichter nachgeschaltet, der Gleichspannungssignale erzeugt und diese an eine Schwellwertstufe abgibt. Jede Schwellwertstufe vergleicht das Signal am Ausgang des Gleichrichters mit einem Schwellwert. Wenn die Frequenzen der Gruppensignale GR1 und GR2 so verschoben sind, dass sie den Frequenzbereich von 3520 bis 4160 Hz um mehr als 15 Hz unter- bzw. überschreiten, geben die Diskriminatoren D1 und D2 Signale G1 bzw. S5 mit dem Binärwert 0 ab. Andernfalls haben die Signale den Binärwert 1. Weitere Einzelheiten der Regeleinheit R2 werden zusammen mit den in Fig. 5 dargestellten Diagrammen beschrieben.

Die Fig. 5 zeigt den Frequenzbereich der Gruppensignale GR1 und GR2 und die Durchlassbereiche der Bandpässe B2 und B3 in den Diskriminatoren D1 und D2. In den zugehörigen Zeitdiagrammen sind die Grobregelsignale G1 und G2 sowie ein Sperrsignal S6 dargestellt.

Zum Zeitpunkt t1 wird angenommen, dass die Frequenzen der Gruppensignale GR1 um mehr als 15 Hz nach links verschoben sind, so dass das Grobregelsignal G1 den Binärwert 0 annimmt, während das Signal S5 den Binärwert 1 hat. Weiterhin wird angenommen, dass Funkstörungen auftreten. In diesem Fall soll keine Grobregelung stattfinden. Die Grobregelsignale G1 und die Signale S5 werden dem Differenzierglied DIF zugeführt, das bei jeder Änderung der Grobregelsignale G1 und der Signale S5 den Frequenzteiler FT3 zurücksetzt. Am Takteingang des Frequenzteilers FT3 liegen Zählimpulse an, die am Ausgang des UND-Gliedes U3 abgegeben werden. An den Eingängen des UND-Gliedes U3 liegen einerseits die Taktimpulse T2 mit einer Folgefrequenz von beispielsweise 2,5 Hz und anderseits die am höchstwertigen Ausgang des Frequenzteilers FT3 abgegebenen Sperrsignale S6 an. Der Zählbereich des Frequenzteilers FT3 ist so ausgebildet, dass das Sperrsignal S6 immer den Binärwert 1 annimmt, wenn innerhalb von 6 Sek. keine Änderungen der Grobregelsignale G1 und der Signale S5 auftreten. Während der Funkstörung sperrt das Sperrsignal S6 den Codierer CD1 und das Grobregelsignal G2 nimmt den Binärwert 0 an.

Zum Zeitpunkt t2 wird angenommen, dass die Funkstörung beendet ist und das Sperrsignal S6 den Binärwert 1 annimmt. Das Grobregelsignal G2 nimmt damit ebenfalls den Binärwert 1 an. Zwischen den Zeitpunkten t2 und t3 hat das Grobregelsignal G1 den Binärwert 0, während das Grobregelsignal G2 den Binärwert 1 hat. In diesem Fall erfolgt eine Grobsynchronisierung. Zwischen den Zeitpunkten t3 und t4 wird angenommen, dass Frequenzen der Gruppensignale GR1 und GR2 innerhalb der Durchlassbereiche der Bandpässe B2 und B3 liegen und damit die Diskriminatoren D1 und D2 jeweils Signale G1 bzw. S5 mit dem Binärwert 1 abgeben. In diesem Fall ist die Frequenzabweichung kleiner als 15 Hz und es erfolgt keine Grobsynchronisierung. Nach dem Zeitpunkt t4 wird angenommen, dass die Frequenzen an der unteren Grenze des Frequenzbandes der Gruppensignale GR2 nicht mehr im Durchlassbereich des Bandpasses B3 liegen und das Signal S5 damit den Binärwert 0 hat. In diesem Fall erfolgt, ebenso wie zwischen den Zeitpunkten t2 und t3 eine Grobregelung.

Die in Fig. 6 dargestellte Auswahlstufe AW enthält zwei Schalter, die durch das Grobregelsignal G2 gesteuert werden. In der durchgezogen dargestellten Stellung schalten die Schalter die Feinregelsignale F1 und F2 als Regelsignale RS1 und RS2 zum Regler RG durch. In diesem Fall hat das Grobregelsignal G2 den Binärwert 0. Wenn das Grobregelsignal G2 den Binärwert 1 hat und damit anzeigt, dass eine Grobregelung durchgeführt wird, werden die Grobregelsignale G1 und die Taktimpulse T2 als Regelsignale RS1 bzw. RS2 zum Regler RG durchgeschaltet.

Der Regler RG enthält einen Codierer CD2, einen Zähler Z2, einen Addierer AD, zwei Frequenzmultiplizierer FM1 und FM2 und zwei Frequenzteiler FT4 und FT5. Den Frequenzmultiplizierern FM1 und FM2 werden an den Takteingängen die Taktimpulse T1 zugeführt. Sie teilen die Folgefrequenz der Taktimpulse T1 durch Teilungsfaktoren, die durch vom Zähler Z2 und vom Addierer AD abgegebene Signale festgelegt werden. Derartige Frequenzmultiplizierer sind allgemein bekannt und beispielsweise aus jeweils drei unter der Bezeichnung Sn7497 im Handel erhältlichen integrierten Digitalbausteinen zusammensetzbar. Der Zähler Z2 ist als Zwei-Richtungs-Zähler ausgebildet und er wird in Abhängigkeit von zwei vom Codierer CD2 abgegebenen Zählimpulsen aufwärts oder abwärts gezählt. Beim Einschalten der Schaltungsanordnung wird der Zähler durch Schliessen des Schalters SW auf einen Wert eingestellt, der so festgelegt ist, dass die Mischsignale MS1 und MS2 die Sollwerte von 5200 bzw. 5920 Hz annehmen. Zu diesem Zweck werden die Ausgänge des Zählers Z2 mit den Eingängen des Frequenzmultiplizierers FM1 und mit den Eingängen eines Addierers AD verbunden, der von dem Zählerstand des Zählers Z2 immer den als Dualzahl dargestellten Wert 12 subtrahiert. Die Ausgänge des Addierers AD sind mit den Eingängen des Frequenzmultiplizierers FM2 verbunden. Den Frequenzmultiplizierern FM1 und FM2 sind zur Beseitigung von kurzzeitigen Schwankungen der Folgefrequenz die an ihren Ausgängen abgegebenen Signale die Frequenzteiler FT4 und FT5 mit einem konstanten Teilungsfaktor von beispielsweise 512 nachgeschaltet. Die Frequenzmultiplizierer FM1 und FM2 weisen unmittelbar nach dem Einschalten der Schaltungsanordnung Teilungsverhältnisse auf, mit denen die Folgefrequenz der Taktimpulse T1 so geteilt wird, dass einerseits die Mischsignale MS1 die Folgefrequenz 5200 Hz und anderseits die Mischsignale MS2 die Folgefrequenz 5920 Hz haben.

Im Fall der Grobregelung nehmen, gesteuert durch das Grobregelsignal G2 die Schalter in der Auswahlstufe AW die gestrichelt dargestellte Stellung ein. In diesem Fall erzeugt der Codierer CD2 aus den Regelsignalen RS1 und RS2 Zählimpulse mit der Folgefrequenz der Taktimpulse T2, die den Zähler Z2 in Abhängigkeit vom Grobregelsignal G1 aufwärts oder abwärts zählen. Infolge des geänderten Zählerstandes des Zählers Z2 ändern die Frequenzmultiplizierer FM1 und FM2 den Teilungsfaktor und die Folgefrequenz der Mischsignale MS1 und MS2 wird verändert. Wenn keine Grobregelung durchgeführt wird, nimmt das Grobregelsignal G2 den Binärwert 0 an und bringt die Schalter in der Auswahlstufe AW in die durchgezogen dargestellte Stellung. In diesem Fall erzeugt der Codierer CD2 aus den Regelsignalen RS1 und RS2 Zählimpulse, die mit der Folgefrequenz der Feinregelsignale F1 den Zähler Z2 aufwärts oder abwärts zählen. Die Zählrichtung wird dabei durch das Feinregelsignal F2 festgelegt.

Um zu verhindern, dass die Folgefrequenzen der Mischsignale MS1 und MS2 vorgegebene Grenzwerte überschreiten, sind die Ausgänge des Zählers Z2 mit dem Codierer CD2 verbunden. Der Codierer CD2 verhindert eine Erzeugung von Zählimpulsen, wenn die Zählerstände des Zählers Z2 entsprechende Grenzwerte über- oder unterschreiten.

## Patentansprüche

1. Schaltungsanordnung zum Korrigieren von Frequenzfehlern bei einer Übertragung von Daten durch Datensignale, die entsprechend einer frequenzdifferentiellen Phasenmodulation moduliert sind, bei der eine Regelstufe (R) mit einem Grobregelkreis (R2, AW, RG, MD) ud einem Feinregelkreis (R1, AW, RG, MD) vorgesehen sind, die aus den Datensignalen korrigierte Datensignale erzeugen und bei der aus den korrigierten Datensignalen mittels eines Demodulators (DM) die übertragenen Daten zurückgewonnen werden, gekennzeichnet durch einen Modulator (MD), der durch Umsetzung der Datensignale (D) mit Mischsignalen (MS1, MS2) Gruppensignale (GR1 und GR2) erzeugt, die die korrigierten Datensignale darstellen, durch eine erste Regeleinheit (R1), die aus den Gruppensignalen (GR1) Feinregelsignale (F1, F2) erzeugt, wenn der Frequenzfehler der Messsignale (MS1, MS2) kleiner als ein vorgegebener Betrag ist, durch eine zweite Regeleinheit (R2), die aus den Gruppensignalen (GR1, GR2) Grobregelsignale (G1, G2) erzeugt, wenn der Frequenzfehler grösser als der vorgegebene Betrag ist, durch eine Auswahlstufe (AW), die in Abhängigkeit von der Grösse des Frequenzfehlers aus den Feinregelsignalen (F1, F2) und den Grobregelsignalen (G1, G2) Regelsignale (RS1, RS2) erzeugt und durch einen gemeinsamen Regler (RG), der aus Taktimpulsen (T1) vorgegebener Folgefrequenz in Abhängigkeit von den Regelsignalen (RS1, RS2) die Mischsignale (MS1, MS2) erzeugt.

2. Schaltungsanordnung nach Anspruch 1, dadurch gekennzeichnet, dass die erste Regeleinheit (R1) einen ersten Frequenzteiler (FT1) enthält, der die Folgefrequenz der Gruppensignale (GR1) durch einen vorgegebenen Faktor teilt und der Messsignale (S2) erzeugt, einen zweiten Frequenzteiler (FT2) enthält, der jeweils während der durch die Messsignale (S2) festgelegten Zeitdauer freigegeben wird, der die Folgefrequenz der Taktimpulse (T1) durch einen vorgegebenen Faktor teilt und der Steuersignale (S3) erzeugt, und dass die erste Regeleinheit (R1) einen Zähler (Z1) enthält, der in Abhängigkeit von den Steuersignalen (S3) aufwärts oder abwärts gezählt wird und der beim Erreichen vorgegebener Werte die Feinregelsignale (F1, F2) erzeugt.

3. Schaltungsanordnung nach Anspruch 1, dadurch gekennzeichnet, dass die erste Regeleinheit (R1) einen Phasendetektor (PH) enthält, der bei jeder Änderung der Phase der Gruppensignale (GR1) die Frequenzteiler (FT1, FT2) zurücksetzt.

4. Schaltungsanordnung nach einem der Ansprüche 1 bis 3, dadurch gekennzeichnet, dass die zweite Regeleinheit (R2) zwei Diskriminatoren (D1, D2) enthält, die Signale (G1, S5) mit ersten bzw. zweiten Binärwerten («1» bzw. «0») erzeugen, wenn die Frequenzen der Gruppensignale (GR1, GR2) innerhalb bzw. ausserhalb eines vorgegebenen Frequenzbereichs liegen und einen Codierer (CD1) enthält, der aus den von den Diskriminatoren (D1, D2) erzeugten Signalen (G1, S5) die Grobregelsignale (G1, G2) erzeugt.

5. Schaltungsanordnung nach Anspruch 4, dadurch gekennzeichnet, dass die zweite Regeleinheit (R2) einen Frequenzteiler (FT3) enthält, der durch Taktimpulse (T2) niedriger Folgefrequenz fortgeschaltet wird, der bei jeder Änderung der von den Diskriminatoren (D1, D2) abgegebenen Signale (G1, S5) zurückgesetzt wird und der Sperrsignale (S6) an den Codierer (CD1) abgibt.

6. Schaltungsanordnung nach einem der vorangehenden Ansprüche, dadurch gekennzeichnet, dass der Regler (RG) einen ersten und zweiten Frequenzmultiplizierer (FM1, FM2) enthält, die die Folgefrequenz der Taktimpulse (T1) in Abhängigkeit von von einem Zähler (Z2) abgegebenen Ausgangssignalen durch veränderbare Teilungsfaktoren teilen und die die Mischsignale (MS1, MS2) erzeugen, dass die Ausgangssignale dem ersten Frequenzmultiplizierer (FM1) unmittelbar und dem zweiten Frequenzmultiplizierer (FM2) über einen Addierer (AD) zugeführt werden, der von der durch die Ausgangssignale jeweils dargestellten Dualzahl eine konstante Dualzahl subtrahiert, und dass der Regler (RG) einen Codierer (CD2) enthält, der in Abhängigkeit von den Regelsignalen (RS1, RS2) den Zähler (Z2) aufwärts oder abwärts zählt.

7. Schaltungsanordnung nach Anspruch 6, dadurch gekennzeichnet, dass jedem Frequenzmultiplizierer (FM1, FM2) ein Frequenzteiler (FT4, FT5) nachgeschaltet ist, der die Folgefrequenzen der Mischsignale (MS1, MS2) jeweils durch einen vorgegebenen Teilungsfaktor teilt.

## Claims

1. Circuit arrangement for correcting frequency errors in the transmission of data by means of data signals which are modulated in accordance with a frequency-differential phase modulation, wherein a regulating stage (R) is provided with a coarse regulating circuit (R2, AW, RG, MD) and a fine regulating circuit (R1, AW, RG, MD) which convert the data signals into corrected data signals, and wherein the items of transmitted data are regained from the corrected data signals by means of a demodulator (DM), characterised by a modulator (MD) which, by converting the data signals (D) with mixing signals (MS1, MS2), produces group signals (GR1 and GR2) which represent the corrected data signals, further characterised by a first regulating unit (R1) which produces fine regulating signals (F1, F2) from the group signals (GR1) when the frequency error of the measuring signals (MS1, MS2) is smaller than a predetermined value, further characterised by a second regulating unit (R2) which produces coarse regulating signals (G1, G2) from the group signals (GR1, GR2) when the frequency error exceeds the predetermined value, further characterised by a selector stage (AW) which produces regulating signals (RS1, RS2) from the fine regulating signals (F1, F2) and from the coarse regulating signals (G1, G2) in dependence upon the magnitude of the frequency error, and finally characterised by a common regulator (RG) which produces the mixing signals (MS1, MS2) from clock pulses (T1) of predetermined repetition frequency in dependence upon the regulating signals (RS1, RS2).

2. Circuit arrangement as claimed in claim 1, characterised in that the first regulating unit (R1) contains a first frequency divider (FT1) which divides the repetition frequency of the group signals (GR1) by a predetermined factor and which produces measuring signals (S2), and further contains a second frequency divider (FT2) which is always released during the period of time determined by the measuring signals (S2), which divides the repetition frequency of the clock pulses (T1) by a predetermined factor and which produces control signals (S3), and that the first regulating unit (R1) contains a counter (Z1) which counts upwards or downwards in dependence upon the control signals (S3) and which produces the fine regulating signals (F1, F2) when predetermined values are reached.

3. Circuit arrangement as claimed in claim 1, characterised in that the first regulating unit (R1) contains a phase detector (PH) which resets the frequency dividers (FT1, FT2) each time a change occurs in the phase of the group signals (GR1).

4. Circuit arrangement as claimed in one of claims 1 to 3, characterised in that the second regulating unit (R2) contains two discriminators (D1, D2) which produce signals (G1, S5) having first or second binary values («1» or «0») when the frequencies of the group signals (GR1, GR2) lie inside or outside respectively of a predetermined frequency range, and further contains a coder (CD1) which produces the coarse regulating signals (G1, G2) from the signals (G1, S5) which have been produced by the discriminators (D1, D2).

5. Circuit arrangement as claimed in claim 4, characterised in that the second regulating unit (R2) contains a frequency divider (FT3) which is stepped on by clock pulses (T2) of low repetition frequency and which is reset each time a change occurs in the signals (G1, S5) which have been emitted by the discriminators (D1, D2) and which emits blocking signals (S6) to the coder (CD1).

6. Circuit arrangement as claimed in one of the preceding claims, characterised in that the regulator (RG) contains a first and second frequency multiplier (FM1, FM2) which divide the repetition frequency of the clock pulses (T1) by variable division factors in dependence upon output signals which have been emitted by a counter (Z2), and which produce the mixing signals (MS1, MS2), that the output signals are fed to the first frequency multiplier (FM1) directly and to the second frequency multiplier (FM2) via an adder (AD) which subtracts a constant binary number from the binary number in each case represented by the output signals, and that the regulator (RG) contains a coder (CD2) which causes the counter (Z2) to count upwards or downwards in dependence upon the regulating signals (RS1, RS2).

7. Circuit arrangement as claimed in claim 6, characterised in that each frequency multiplier (FM1, FM2) is followed by a frequency divider (FT4, FT5) which divides each of the repetition frequencies of the mixing signals (MS1, MS2) by a predetermined division factor.

**Revendications**

1. Montage pour corriger des erreurs de fréquence lors de la transmission de données par des signaux de données, modulées suivant une modulation de phase à fréquence différentielle, dans lequel il est prévu un étage de régulation (R) avec un circuit de régulation grossière (R2, AW, RG, MD) et un circuit de régulation fine (R1, AW, RG, MD) qui fournissent à partir de signaux de données des signaux de données corrigés et dans lequel on récupère, à partir des signaux de données corrigés et à l'aide d'un démodulateur (DM), les données transmises, caractérisé par un modulateur (MD) qui, par conversion des signaux de données (D) avec des signaux de mélange (MS1, MS2) produit des signaux de groupe (GR1 et GR2) qui représentent les signaux de données corrigés, par une première unité de régulation (R1) qui produit à partir des signaux de groupe (GR1) des signaux à régulation fine (F1, F2) lorsque l'erreur de fréquence des signaux de mesure (MS1, MS2) est inférieure à une valeur prédéterminée, par une seconde unité de régulation (R2) qui produit à partir des signaux de groupe (GR1, GR2) des signaux de régulation grossière (G1, G2) lorsque l'erreur de fréquence est supérieure à la valeur prédéterminée, par un étage de sélection (AW) qui, en fonction de l'importance de l'erreur de fréquence, produit à partir des signaux de régulation fine (F1, F2) et des signaux de régulation grossière (G1, G2), des signaux de régulation (RS1, RSA2) et par un régulateur commun (RG) qui produit, à partir d'impulsions de cadence (T1) de fréquences de répétition prédéterminées, les signaux de mélange (MS1, MS2), en fonction des signaux de régulation (RS1, RS2).

2. Montage selon la revendication 1, caractérisé par le fait que la première unité de régulation (R1) comporte un premier diviseur de fréquence (FT1) qui divise la fréquence de répétition des signaux de groupe (GR1) par un facteur prédéterminé et qui produit des signaux de mesure (S2), un second diviseur de fréquence (FT2) qui est débloqué pendant la durée déterminée par des signaux de mesure (S2), qui divise la fréquence de répétition des impulsions de cadence (T1) par un facteur prédéterminé et qui produit des signaux de commande (S3), et que la première unité de régulation (R1) comporte un compteur (Z1) qui, en fonction des signaux de commande (F3), compte dans le sens croissant ou décroissant et qui, lorsque les valeurs prédéterminées sont atteintes, produit des signaux de régulation fines (F1, F2).

3. Montage selon la revendication 1, caractérisé par le fait que la première unité de régulation (R1) comporte un détecteur de phase (PH) qui, à chaque modification de la phase des signaux de groupe (GR1), remet dans leur état initial les diviseurs de fréquence (FT1, FT2).

4. Montage selon l'une des revendications 1 à 3, caractérisé par le fait que la seconde unité de régulation (R2) comporte deux discriminateurs (D1, D2) qui produisent des signaux (G1, S5) avec des première et seconde valeurs binaires («1» ou «0»), lorsque les fréquences des signaux de groupe (GR1, GR2) se situent à l'intérieur ou à l'extérieur d'une plage de fréquence prédéterminée, ladite seconde unité de régulation comportant en outre un codeur (CD1) qui fournit, à partir des signaux (G1, S5) produits par les discriminateurs (D1, D5), les signaux de régulation grossière (G1, G2).

5. Montage selon la revendication 4, caractérisé par le fait que la seconde unité de régulation (R2) comporte un diviseur de fréquence (FT3) qui est commandé par les impulsions de cadence (T2) de faible fréquence de répétition, qui, à chaque modification des signaux (G1, S5) émis par les discriminateurs (D1, D2), est remis dans son état initial et qui émet pour le décodeur (CD1) des signaux de blocage (S6).

6. Montage selon l'une des revendications précédentes, caractérisé par le fait que le régulateur (RG) comporte un premier et un second multiplicateur de fréquence (FM1, FM2) qui divisent la fréquence de répétition des impulsions de cadence (T1), en fonction des signaux de sortie émis par un compteur (Z2), par des facteurs de division susceptibles d'être modifiés, et qui produisent les signaux de mélange (MS1, MS2), par le fait que les signaux de sortie sont appliqués directement au premier multiplicateur de fréquence (FM1) et au second multiplicateur de fréquence (FM2) par l'intermédiaire d'un additionneur (AD) qui soustrait du nombre binaire représenté respectivement par les signaux de sortie, un nombre binaire constant et par le fait que le régulateur (RG) comporte un codeur (CD2) qui, en fonction des signaux de régulation (RS1, RS2) commande le compteur (Z2) dans le sens croissant ou décroissant.

7. Montage selon la revendication 6, caractérisé par le fait qu'en aval de chacun des multiplicateurs de fréquence (FM1, FM2) est monté un diviseur de fréquence (FT4, FT5) qui divise les fréquences de répétition des signaux de mélange (MS1, MS2) respectivement par un facteur de division prédéterminé.

FIG 1

FIG 2

65

# FIG 3

# FIG 4

# FIG 5

# FIG 6